(19) Europäisches Patentamt

European Patent Office

Office européen des brevets

(11) **EP 1 522 486 A2**

(12) **EUROPEAN PATENT APPLICATION**

(43) Date of publication:
**13.04.2005 Bulletin 2005/15**

(51) Int Cl.$^7$: **B62D 15/02**

(21) Application number: **04023720.8**

(22) Date of filing: **05.10.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **06.10.2003 JP 2003347376**

(71) Applicant: **YAZAKI CORPORATION**
**Tokyo (JP)**

(72) Inventors:
 • **Sakabe, Takashi**
  **Susono-shi Shizuoka-ken (JP)**
 • **Takuma, Emi**
  **Susono-shi Shizuoka-ken (JP)**

(74) Representative: **HOFFMANN - EITLE**
 **Patent- und Rechtsanwälte**
 **Arabellastrasse 4**
 **81925 München (DE)**

(54) **Rotation angle sensor**

(57) A rotation angle sensor (1) has first and second detection gears (3,4) interlinked with and rotatable with a steering shaft, a magnetic sensor (32) to detect a rotation angle of the first detection gear (3), and a magnetic sensor (42) to detect a rotation angle of the second detection gear (4). The rotation angle sensor also has a processor (5) to calculate a period number of the first detection gear (3) according to rotational positions detected by the magnetic sensors (32) and compute a rotation angle of the steering shaft according to the calculated period number and detected rotation angle of the first detection gear (3).

FIG.3

EP 1 522 486 A2

**Description**

**BACKGROUND OF THE INVENTION**

1. Field of the Invention

The present invention relates to a rotation angle sensor capable of detecting the rotation angle of a steering shaft.

2. Description of Related Art

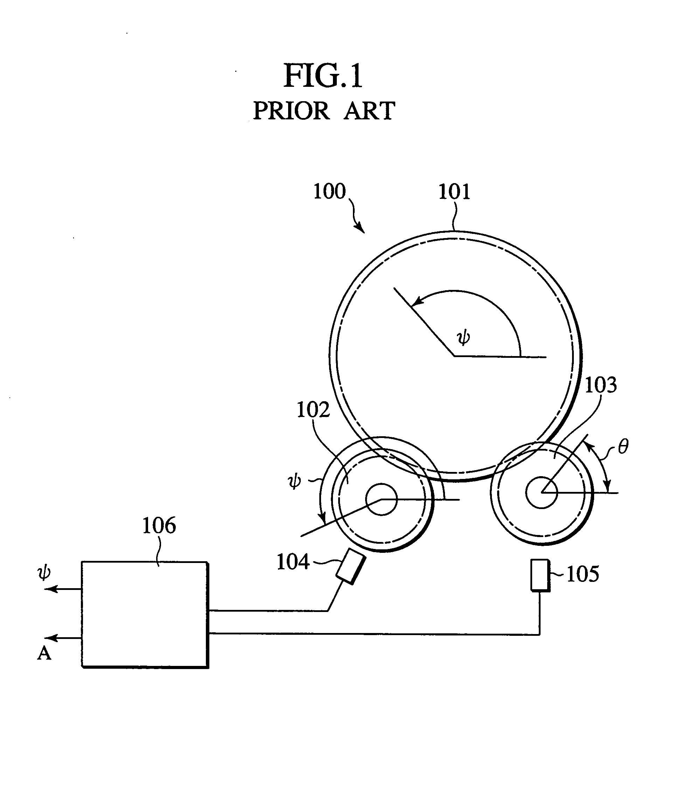

There is a technique that is installed in a vehicle to detect the rotation angle of the steering shaft. An example of such a technique is a rotation angle sensor 100 shown in Fig. 1. The rotation angle sensor 100 has a main gear 101, detection gears 102 and 103, magnetic sensors 104 and 105, and a processor 106.

The main gear 101 rotates with the steering shaft. The detection gears 102 and 103 are interlinked with the main gear 101 and rotate faster than the main gear 101. The magnetic sensor 104 detects an absolute angle of the detection gear 102 within the range from 0 to 360 degrees and outputs a detected signal. The magnetic sensor 105 detects an absolute angle of the detection gear 103 within the range of 0 to 360 degrees and outputs a detected signal. Based on the detected signals from the magnetic sensors 104 and 105, the processor 106 calculates the steering angle of the steering shaft from a reference position. Here, the steering angle is a rotation angle uniquely determined according to the rotation of the steering shaft from the reference position. If an apparent rotation angle of the steering shaft is, for example, 10 degrees, the steering angle of the steering shaft is determined from among 10, 370, and 730 degrees depending on the number of rotations of the steering shaft.

The magnetic sensor 104 outputs an A-phase pulse signal and a B-phase pulse signal according to the detected absolute angle, and when the steering shaft is brought to a neutral state or whenever the detection gear 102 makes a turn, it outputs a Z-phase pulse signal. Namely, the magnetic sensor 104 provides 3-phase pulse signals.

With the use of the signals, a higher system in the vehicle calculates the relative angle of the steering shaft. The neutral state of the steering shaft is the state of the steering shaft established when the vehicle runs straight. The relative angle is a rotation angle measured with the neutral state of the steering shaft serving as a reference.

**SUMMARY OF THE INVENTION**

The detection gear 102 makes a plurality of turns while the steering shaft makes a turn. Therefore, the magnetic sensor 104 outputs a plurality of Z-phase pulse signals while the steering shaft makes a turn. Accordingly, the higher system in the vehicle must identify a true Z-phase pulse signal, which is provided when the steering shaft comes to a neutral state, from among the plurality of Z-phase pulse signals. Due to this, the higher systemmust carry out complicated procedures to calculate the relative angle.

There is a technique in which the processor 106 calculates the rotation angle of the steering shaft, and if the calculated rotation angle is equal to the neutral angle, it outputs a Z-phase pulse signal. The neutral angle is a rotation angle established when the steering shaft is in a neutral state, or an angle obtained by adding a multiple of 360 to the neutral-state angle.

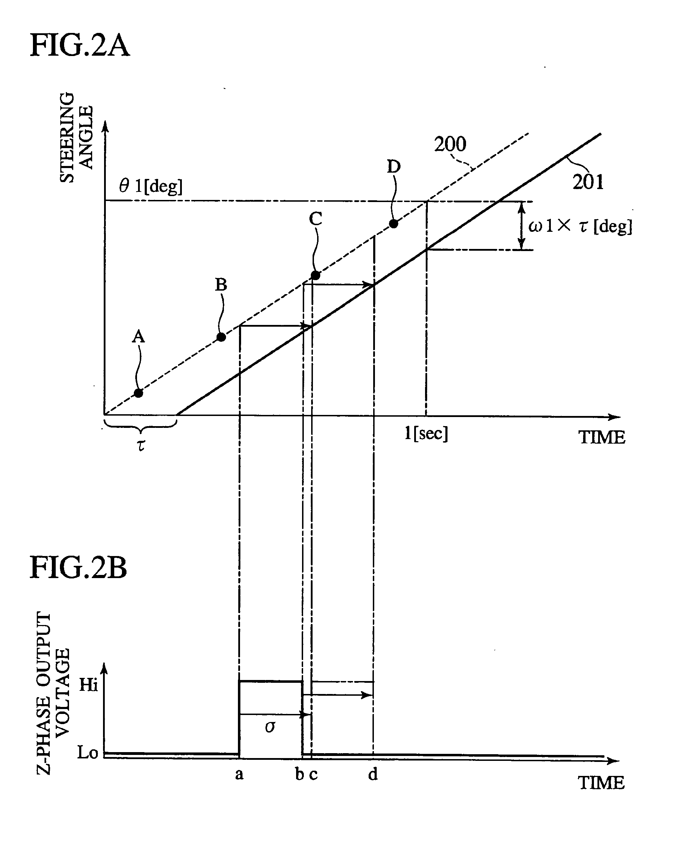

These techniques, however, have some problems. These problems will be explained with reference to Figs. 2A and 2B. In Fig. 2A, a line 200 indicates the relationship between the actual steering angle of the steering shaft and time, and a line 201 indicates the relationship between the steering angle calculated by the processor 106 and time. Figure 2B is a timing chart showing the output timing of a 2-phase pulse signal.

Calculating a steering angle needs a predetermined calculation time. Therefore, a steering angle calculated by the processor 106 at a given time point involves an error with respect to the actual steering angle at the given time point. If the steering shaft has a rotation speed (angular speed) of $\omega_1$ (deg/sec) and if the calculation time for calculating a steering angle is r, the steering shaft will turn by $\omega_1\tau$ degrees during the time $\tau$ after the processor 106 reads a detected signal. Namely, the above-mentioned error is equal to $\omega_1\tau$ degrees.

The processor 106 calculates a steering angle based on detected signals provided by both the magnetic sensors 104 and 105, and therefore, must solve complicated equations to find the steering angle. This lengthens the time $\tau$ and increases the above-mentioned error.

Even if the processor 106 reads detected signals at the timing a-b when the steering shaft comes to a neutral state, the processor 106 outputs a Z-phase pulse signal at the timing c-d that is ahead of the neutral state by σ degrees. This results in lengthening the calculation time $\tau$ and increasing the error in the output timing of the 2-phase pulse signal.

Lengthening the calculation time r results in a chance that a sampling interval of the processor 106 (an interval between two adjacent time points when the processor 106 reads detected signals) exceeds an interval between the time points a and b. This happens if the processor 106 reads detected signals at time points A and D shown in Fig. 2A. In this case, the processor 106 is unable to read detected signals at the time points a and b. Therefore, the calculated steering angle disagrees with the neutral angle and the processor 106 provides no Z-phase pulse signal.

Simultaneously reading detected signals fromthe two magnetic sensors may improve the calculation accuracy of a steering angle of the steering shaft. This technique, however, requires complicated circuits which increases the manufacturing cost.

To solve these problems of the related arts, an objective of the present invention is to provide a rotation angle sensor capable of speedily calculating a steering angle without complicated circuits.

In order to accomplish this objective, a first aspect of the present invention provides a rotation angle sensor for a multiple-rotation object that is rotatable within a predetermined range. The rotation angle sensor includes first and second rotors interlinked with the multiple-rotation object and having different speed ratios with respect to the multiple-rotation object, a first detector configured to detect the rotational position of the first rotor, a second detector configuredto detect the rotational position of the second rotor, and a processor configured to calculate the rotation angle of the multiple-rotation object from a reference rotation angle. The number of rotations of the first rotor is calculated according to the rotational positions of the first and second rotors. The rotation angle of the multiple-rotation object is calculated from the rotational position and calculated number of rotations of the first rotor. The speed ratio of the first rotor and the speed ratio of the second rotor are selected so that the number of rotations of the multiple-rotation object is uniquely determined from the rotational positions of the first and second rotors.

According to a second aspect of the present invention, the processor obtains the rotational positions of the first and second rotors from the first and second detectors at predetermined time intervals Tsam expressed as follows:

$$Tsam < \frac{\Psi}{2\omega_0} \times \frac{1}{i} \, ,$$

where $i$ is the speed ratio of the first rotor, $\psi$ is an angular range detectable by the first detector, and $\omega_0$ is a maximum angular speed of the multiple-rotation object.

According to a third aspect of the present invention, the processor compares the rotational position difference between the previous rotational position and the present rotational position both detected by the first detector with a predetermined positive allowance and (1) if the rotational position difference is equal to or lower than the allowance, sets a present number of rotations for the first rotor to be equal to a previous number of rotations thereof, (2) if the rotational position difference is greater than the allowance, sets the present number of rotations for the first rotor to be smaller than the previous number of rotations by one, (3) if the rotational position difference is smaller than an opposite number of the allowance, sets the present number of rotations of the first rotor to be larger than the previous number of rotations by one. The allowance satisfies the following expression:

$$\frac{\sigma}{360°} \times 2^{(res3)} \times \frac{m}{n3} < Sx < \frac{1}{2} \, 2^{(res3)}$$

where $\sigma$ (degrees) is an output timing allowance for an angle detected signal provided by the first detector and "res3" (bits) is a position detecting resolution of the first detector.

**BRIEF DESCRIPTION OF THE DRAWINGS**

Figure 1 is a plan view showing a rotation angle sensor according to the related art;
Fig. 2A is a characteristic diagram showing a relationship between the absolute angle of a steering shaft calculated by the rotation angle sensor of the related art and the actual absolute angle thereof;
Fig. 2B is a timing chart showing the relationship between the ideal output timing of a Z-phase pulse signal and the actual output timing thereof;
Fig. 3 is a plan view showing a rotation angle sensor according to an embodiment of the present invention;
Fig. 4 is a block diagram showing an arrangement around a processor of the rotation angle sensor according to the embodiment;
Figs. 5A and 5B are characteristic diagrams showing relationships between digital signal values provided by magnetic sensors and the actual absolute angles of a steering shaft according the embodiment;
Fig. 6 is a characteristic diagram showing the relationship between digital signal values provided by the magnetic sensor and time according to the embodiment;

Fig. 7A is a characteristic diagram showing the relationship between absolute angles calculated by the processor and the actual absolute angle of the steering shaft according to the embodiment;

Fig. 7B is a characteristic diagram showing the relationship between the output timing of a Z-phase pulse signal and the actual absolute angle of the steering shaft according to the embodiment; and

Figs. 8 and 9 are flowcharts showing procedures carried out by the rotation angle sensor according to the embodiment.

## DETAILED DESCRIPTION OF EMBODIMENTS

An embodiment of the present invention will be explained with reference to the drawings. The structure of a rotation angle sensor 1 according to an embodiment of the present invention and the principal functions of components of the rotation angle sensor 1 will be explained first.

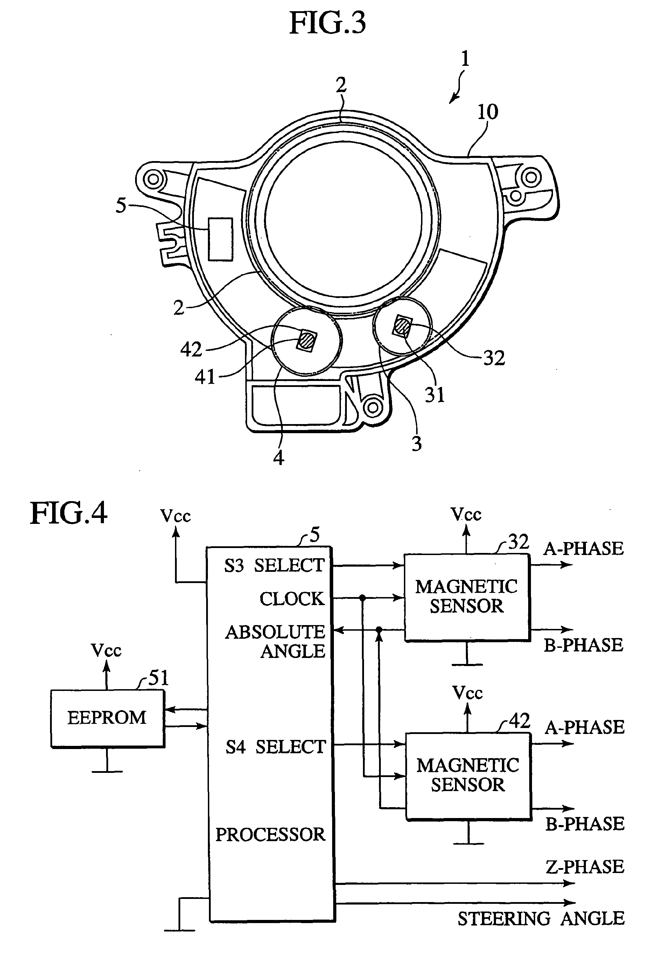

Figure 3 is a plan view showing the rotation angle sensor 1 and Fig. 4 is a block diagram showing a circuitry around a processor 5 of the rotation angle sensor 1. In Figs. 3 and 4, the rotation angle sensor 1 is contained in a casing 10 and has a main gear 2, detection gears 3 and 4, magnets 31 and 41, a magnetic sensor (first detector) 32, a magnetic sensor (second detector) 42, the processor 5, and a memory (EEPROM) 51.

The main gear 2 rotates together with the steering shaft. The detection gear 3 is interlocked with the main gear 2 and rotates with the main gear 2. The radius of the detection gear 3 is smaller than that of the main gear 2. Therefore, the detection gear 3 rotates faster than the main gear 2.

Operation of the magnetic sensors

The magnet 31 is magnetized in one direction. Preferably, the magnet 31 is an axisymmetric columnar magnet. The magnet 31 is fixed relative to the rotation center of the detection gear 3 so that the magnetized direction of the magnet 31 crosses a rotary shaft of the detection gear 3. The magnet 31 rotates together with the detection gear 3. The magnet 31 is magnetized to have two poles, and therefore, a magnetic field around the rotation center thereof changes as the magnet 31 rotates.

As shown in Figs. 3 to 5A, the magnetic sensor 32 is arranged adjacent to the magnet 31 to face the magnet 31 and is fixed relative to the casing 10. The magnetic sensor 32 detects a magnetic field distribution around the magnet 31. The detected magnetic field distribution is used to detect the rotational position of the detection gear 3 in the range from 0 to 360 degrees with the clockwise direction being a positive direction. The magnetic sensor 32 generates a digital signal of a predetermined resolution representative of the detected rotational position. The predetermined resolution is "res3" bits. Typically, the resolution "res3" is an integer in a range between 6 and 10.

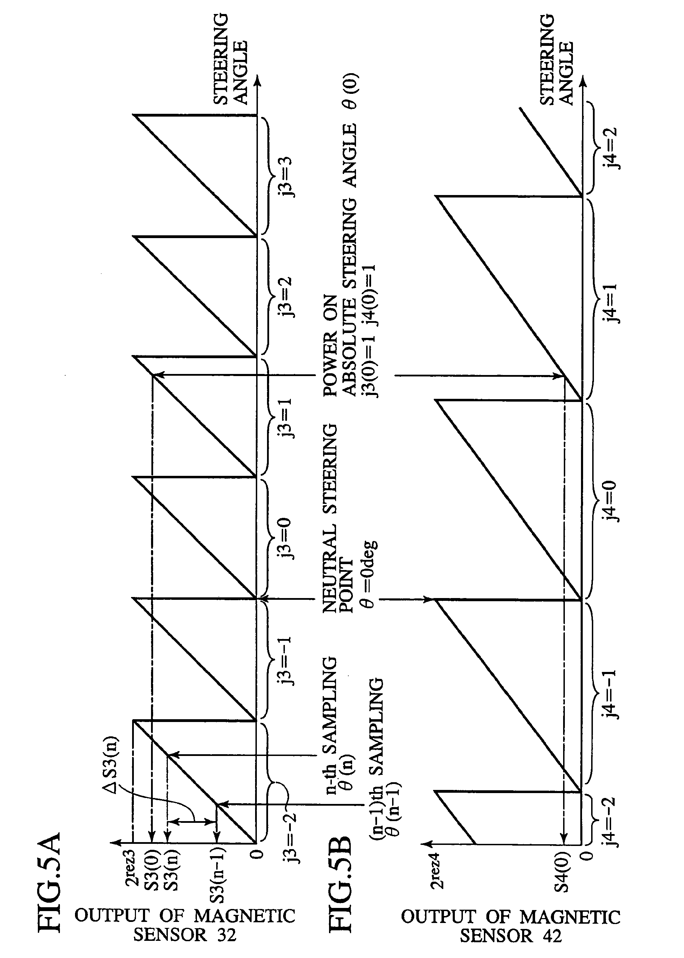

Figure 5A is a characteristic diagram showing an actual rotational position (abscissa) of the steering shaft and a value S3 (n) (ordinate) of a digital signal provided by the magnetic sensor 32. Here, the numeric n is a sampling number. The digital signal of "res3" bits generated by the magnetic sensor 32 is supplied to the processor 5 in response to a select signal and a clock signal provided by the processor 5. The digital signal becomes zero when the steering shaft comes to a neutral state or whenever the detection gear 3 makes a turn from the neutral state. When the rotation angle sensor 1 is turned on, the digital signal is initialized to S3(0). A digital signal value read by the processor 5 at an n-th sampling point (n is an integer equal to or greater than 1) is S3(n).

Referring to Fig. 4, the magnetic sensor 32 converts a generated digital signal into two-phase (A-phase and B-phase) pulse signals, which are supplied to a higher system in a vehicle in which the rotation angle sensor 1 is installed.

Returning to Fig. 3, the detection gear 4 is interlocked with the main gear 2 and rotates with the main gear 2. The radius of the detection gear 4 is smaller than that of the main gear 2 and larger than that of the detection gear 3. Accordingly, the detection gear 4 rotates faster than the main gear 2 and slower than the detection gear 3. Namely, the speed ratio of the detection gear 3 is greater than that of the detection gear 4. The speed ratio $i3$ of the detection gear 3 is v3/v1 where v3 is a rotation speed of the detection gear 3 and $v1$ is a rotation speed of the main gear 2. The speed ratio i4 of the detection gear 4 is v4/v1 where $v4$ is the rotation speed of the detection gear 4 and $v1$ is the rotation speed of the main gear 2. As the speed ratio $i3$ ($i4$) of the detection gear 3 (4) increases, the rotation speed of the detection gear 3 (4) relative to that of the main gear 2 increases.

The magnet 41 is magnetized in one direction like the magnet 31. The magnet 41 is fixed at the rotation center of the detection gear 4 so that the magnetized direction of the magnet 41 crosses a rotary shaft of the detection gear 4. The magnet 41 rotates together with the detection gear 4. The magnet 41 is magnetized to have two poles. Therefore, a magnetic field around the rotation center thereof changes as the magnet 41 rotates.

Figure 5B is a characteristic diagram showing the relationship between the actual steering angle (abscissa) of the steering shaft and digital signal values S4(0) to S4(n) (ordinate) provided by the magnetic sensor 42. In Figs. 3 to 5B, the magnetic sensor 42 is arranged adjacent to the magnet 41 to face the magnet 41 and is fixed relative to the casing 10. The magnetic sensor 42 detects a magnetic field distribution around the magnet 41 and provides a rotation angle in the range from 0 to 360 degrees with the clockwise direction being a positive direction. The magnetic sensor 42 generates a digital signal of a predetermined resolution representative of the detected rotational position. The predetermined resolution is assumed as "res4" bits. Typically, "res4" is an integer in a range between 6 and 10. In response to a select signal and a clock signal from the processor 5, the magnetic sensor 42 supplies the generated digital signal to the processor 5.

The digital signal provided by the magnetic sensor 42 becomes zero when the steering shaft comes to a neutral state or whenever the detection gear 4 makes a turn from the neutral state. When the rotation angle sensor 1 is turned on, the digital signal is initialized as S4(0).

In Fig. 4, the magnetic sensor 42 converts a generated digital signal into two-phase (A-phase and B-phase) pulse signals, which are supplied to the higher system in the vehicle. The higher system uses the two-phase pulse signals that meet a required resolution from among the two-phase pulse signals provided by the magnetic sensors 32 and 42.

One period ("res3" bits) of the magnetic sensor 32 and one period ("res4" bits) of the magnetic sensor 42 may have the least common multiple. This least common multiple is set to be equal to or greater than the rotational range of the steering shaft. A period of the magnetic sensor 32 corresponds to a rotation angle (rotational position) formed by the steering shaft when the detection gear 3 makes a turn. Similarly, a period of the magnetic sensor 42 corresponds to a rotation angle (rotational position) formed by the steering shaft when the detection gear 4 makes a turn. The speed ratio *i3* (= v3/v1) of the detection gear 3 and the speed ratio *i4* (= v4/v1) of the detection gear 4 are each a rational number. Accordingly, if the least common multiple of these rational numbers is equal to or greater than the steering range of the steering shaft, rotational positions of the detection gears 3 and 4 can uniquely determine the number of rotations of the steering shaft. Therefore, the speed ratios (rotation ratios) of the detection gears 3 and 4 relative to the steering shaft are selected so that the rotational positions of the two detection gears can uniquely determine the number of rotations of the steering shaft. If these conditions are met, combinations of digital signal values S3 (0) to S3 (n) with digital signal values S4(0) to S4(n) are uniquely determined as shown in Figs. 5A and 5B.

Operation of the processor

The processor 5 calculates a steering angle when the rotation angle sensor 1 is turned on (n = 0) according to digital signals provided by the magnetic sensors 32 and 42. In Figs. 5A and 5B, the output of the magnetic sensors 32 and 42 periodically change in response to gradually increasing steering angles. Accordingly, period numbers j3 (i) and j4 (i) are calculated from a predetermined reference position to a specific steering angle. For example, at a time point (n = 0), a period number j3 (0) of the magnetic sensor 32, a period number j4 (0) of the magnetic sensor 42, and a steering angle θ (0) of the steering shaft are calculated. A period of the output signal of the magnetic sensor corresponds to one turn of the corresponding detection gear. Therefore, a period number corresponds to the number of rotations of the corresponding detection gear.

As explained above, a combination of the digital signal values S3 (0) and S4(0) uniquely corresponds to a steering angle θ. Accordingly, the processor 5 can refer to the digital signals provided by the magnetic sensors 32 and 42, to uniquely calculate the period number j3(0) or j4(0) and the steering angle θ(0).

More precisely, when the rotation angle sensor 1 is activated, the processor 5 generates a select signal and a clock signal and supplies the signals to the magnetic sensors 32 and 42. Then, the processor 5 reads digital signals provided by the magnetic sensors 32 and 42 and calculates the period number j3 (0) or j4 (0). According to the calculated period number, the processor 5 calculates the steering angle θ(0) of the steering shaft as follows:

$$\theta(0) = \frac{S3(0)}{2^{(res3)}} \times 360° \times \frac{1}{i3} + j3(0) \times 360° \times \frac{1}{i3}$$

$$= \left\{ \frac{S3(0)}{2^{(res3)}} + j3(0) \right\} \times 360° \times \frac{1}{i3}$$

$$\approx \left\{ \frac{S3(0)}{2^{(res3)}} + j3(0) \right\} \times 360° \times \frac{n3}{m} \qquad (7)$$

where *i3* is the above-mentioned speed ratio *i3* (=v3/v1) of the detection gear 3, *m* is the number of teeth of the main gear 2, and *n3* is the number of teeth of the detection gear 3.

The period number S4 (0) of the magnetic sensor 42 may be used to calculate the steering angle 6(0) as follows:

$$\theta(0) = \frac{S4(0)}{2^{(res4)}} \times 360° \times \frac{n4}{m} + j4(0) \times 360° \times \frac{n4}{m}$$

$$= \left\{ \frac{S4(0)}{2^{(res4)}} + j4(0) \right\} \times 360° \times \frac{n4}{m} \qquad (8)$$

where n4 is the number of teeth of the detection gear 4.

At an *n*-th sampling point, a digital signal is read from one of the magnetic sensors 32 and 42, and according to the read digital signal and the period number j3 (0) or j4(0), a present period number j3(n) of the magnetic sensor 32 at the n-th sampling point or a present period number j4 (n) of the magnetic sensor 42 at the n-th sampling point is calculated. According to the read digital signal and calculated period number j3 (n) or j 4 (n), a steering angle θ(n) of the steering shaft at the *n*-th sampling point is calculated. This will be explained in more detail.

As shown in Fig. 5A, a period number j3(i) (i = 0, 1, ..., n) of the magnetic sensor 32 corresponds to the cumulative number of rotations of the detection gear 3 at the time point i from the reference position (zero) where the steering shaft is in a neutral state. Similarly, as shown in Fig. 5B, a period number j4(k) (k = 0,1, ..., n) of the magnetic sensor 42 corresponds to the cumulative number of rotations of the detection gear 4 at the time point k from the reference position (zero) where the steering shaft is in a neutral state. The steering angles θ(0) to θ(n) calculated by the processor 5 will be zero when the steering shaft is in a neutral state. The processor 5 can calculate a steering angle θ(n) more accurately based on the digital signal provided by the magnetic sensor 32 than based on the digital signal provided by the magnetic sensor 42. This is because the speed ratio of the detection gear 3 is greater than that of the detection gear 4. Therefore, changes in the digital signal values S3(0) to S3(n) per unit rotation of the steering shaft are more frequent than those in the digital signal values S4(0) to S4(n).

Calculating a steering angle θ(n) according to the digital signal provided by the magnetic sensor 32 will be explained.

At an n-th sampling point, the processor 5 outputs a select signal and a clock signal to the magnetic sensor 32. In response to these signals, the magnetic sensor 32 provides a digital signal, which is read by the processor 5.

As shown in Fig. 5A, the processor 5 finds the difference ΔS3 (=S3 (n) -S3 (n-1) ) between the read digital signal value S3 (n) and the previous digital signal value S3(n-1). If the difference ΔS3 satisfies the expression (9) mentioned below, the processor 5 sets a present period number j3(n) to a previous period number j3(n-1).

$$|\Delta S3| \leq Sx \qquad (9)$$

$$\frac{\sigma}{360°} \times 2^{(res3)} \times \frac{m}{n3} < Sx < \frac{1}{2} 2^{(res3)} \qquad (10)$$

where *Sx* is a constant that satisfies the expression (10) and is an allowance having a positive value. In the expression (10), σ is an allowance (degrees) for an output timing error of the Z-phase pulse signal. In Figs. 2A and 2B, the output timing error corresponds to an angle (degrees) that the steering shaft turns in a period between an ideal rise point (the point "a" in Fig. 2B) of the Z-phase pulse signal and an actual rise point (the point "c" in Fig. 2B) of the Z-phase pulse signal. The allowance σ is a minimum value of that angle. For example, if a sampling interval Tsam to be explained later is 1 msec, the allowance σ is 2 degrees.

In the case where the difference *ΔS3* satisfies the expression (11) mentioned below, the present period number j3(n) is set to be smaller than the previous period number j3(n-1) by one.

$$\Delta S3 > Sx \qquad (11)$$

In the case where the difference ΔS3 satisfies the expression (12) mentioned below, the present period number j3(n) is set to be greater than the previous period number j3(n-1) by one.

$$\Delta S3 < -Sx \qquad (12)$$

where the right side of the expression (12) is an opposite number to the right side of the expression (11).

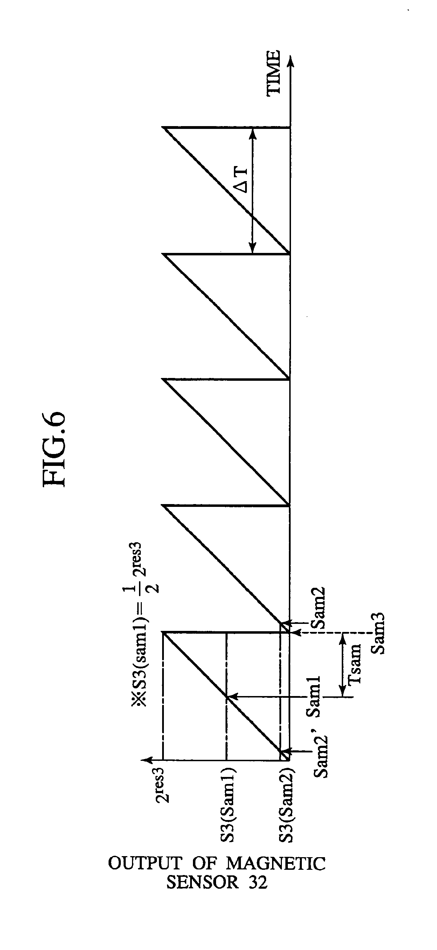

Setting sampling points will be explained with reference to Fig. 6 which is a characteristic diagram showing the relationship between a digital signal value S3(T) (ordinate) provided by the magnetic sensor 32 and time T (abscissa).

According to the embodiment, the processor 5 can calculate a steering angle θ based on a digital signal provided by one of the magnetic sensors 32 and 42. Accordingly, the embodiment can set sampling points so that the sampling interval *Tsam* between two adjacent sampling points is shorter than a conventional sampling interval.

Referring to Fig. 6, a present sampling point is *T=Sam*1, where a digital signal value S3 (Sam1) is $2^{(res3)}/2$. The sampling interval Tsam is supposed to be longer than half of the shortest time $\Delta T$ in which the detection gear 3 needs to turn for a predetermined rotation range (detectable by the magnetic sensor 32 and 360 degrees in this embodiment). In this case, there is a possibility that the digital signal value S3 (Sam2) at the next samplingpoint $T$ (=*Sam*2) is indistinguishable as to whether it is obtained under the steering position of the sampling point Sam2' or of the sampling point *Sam*2. Namely, there is a possibility that the period number at the next sampling point *Sam*2 is indistinguishable as to whether or not it is equal to the period number at the present sampling point *Sam*1.

To correctly find the period number at a given sampling point, sampling points are set so that the sampling interval Tsam satisfies the following expression (13):

$$Tsam < \frac{360°}{2\omega_0} \frac{n3}{m} \tag{13}$$

where $\omega_0$ (deg/sec) is the maximum rotation speed of the steering shaft and the right side of the expression (13) is equal to half of the shortest time $\Delta T$ (Fig. 6) required by the detection gear 3 to make a turn.

According to the embodiment, sampling points are set so that the sampling interval Tsam (sec) satisfies the following expression (14):

$$Tsam \leq \sigma/\omega_0 \tag{14}$$

As a result, the output timing error of the Z-phase pulse signal can be contained within the allowance σ.

According to the calculated period number j3 (n) and the read digital signal value S3 (n), the processor 5 calculates a steering angle θ*(n)* as follows:

$$\theta(n) = \frac{S3(n)}{2^{(res3)}} \times 360° \times \frac{n3}{m} + j3(n) \times 360° \times \frac{n3}{m}$$

$$= \left\{ \frac{S3(n)}{2^{(res3)}} + j3(n) \right\} \times 360° \times \frac{n3}{m} \tag{15}$$

Detected signals related to the calculated steering angles θ (0) to θ(n) are sent to the higher system in the vehicle. At the timing when any one of the calculated steering angles θ(0) to θ(n) becomes equal to a neutral angle (a predetermined angle), a Z-phase pulse signal (angle detected signal) is generated and sent to another higher system in the vehicle that needs the signal.

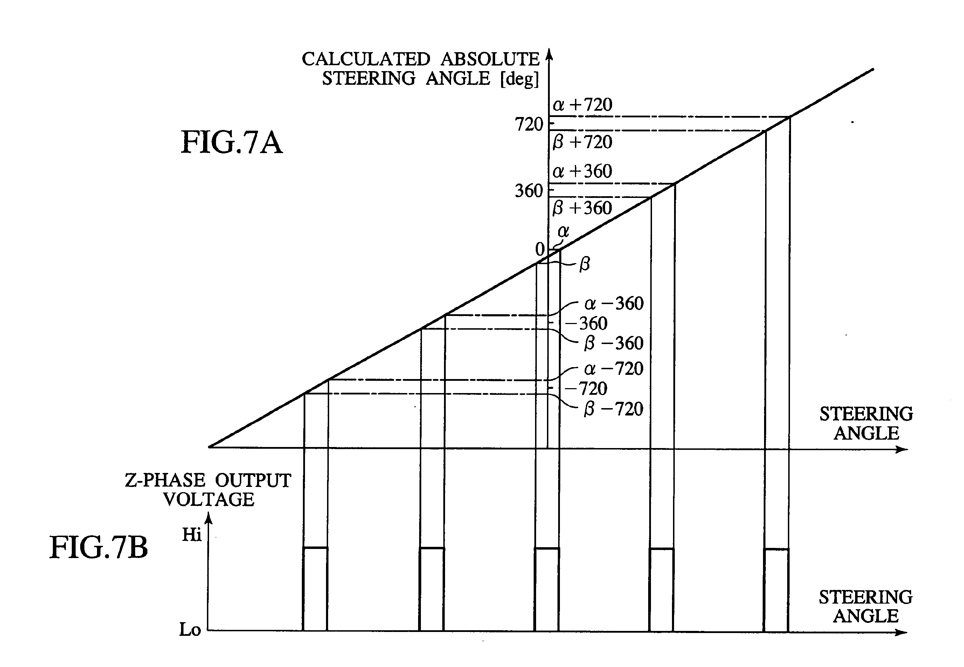

The neutral angle will be explained with reference to Figs. 7A and 7B in which Fig. 7A is a characteristic diagram showing the relationship between real steering angles (absolute angles) (abscissa) of the steering shaft and steering angles (absolute angles) θ(0) to θ(n) (ordinate) calculated by the processor 5 and Fig. 7B is a timing chart showing the relationship between the real steering angles (abscissa) of the steering shaft and the output timing of the Z-phase pulse signal.

In Figs. 7A and 7B, the neutral angle is an angle within the range from α to β (degrees) of rotation angles (play angles) of the steering shaft being a the neutral state, or an angle obtained by adding a multiple of 360 (degrees) to the angle.

Procedures carried out by the rotation angle sensor

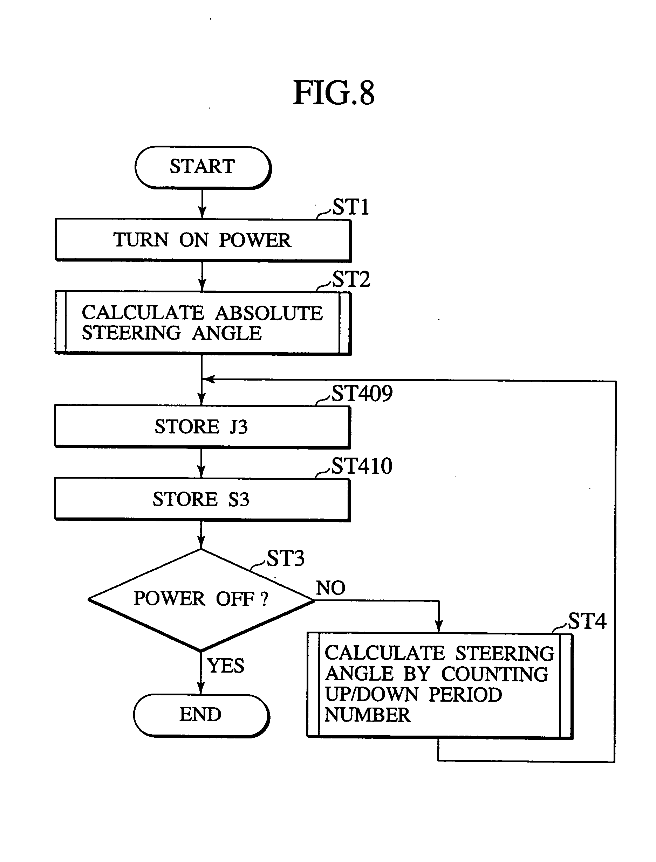

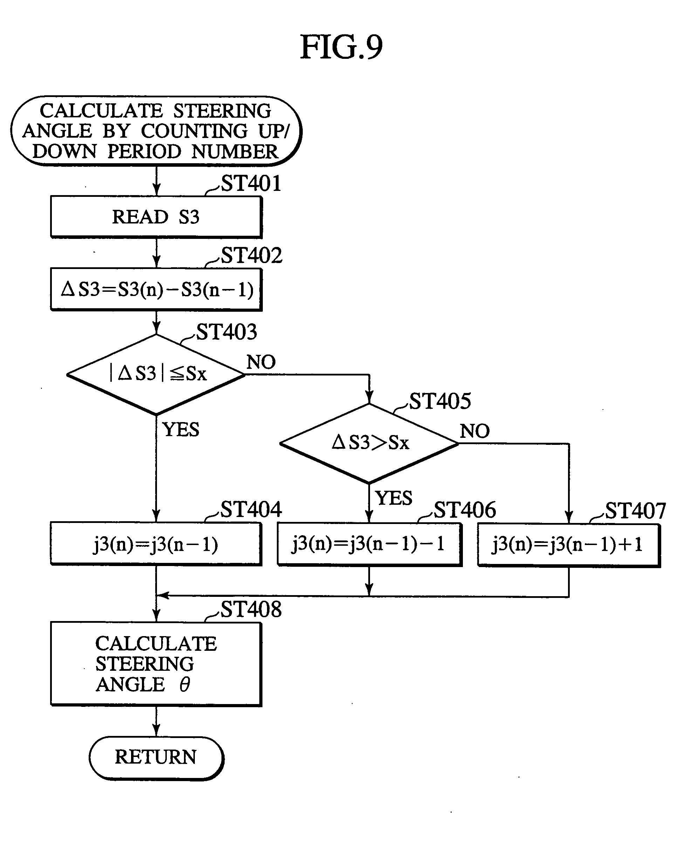

Procedures carried out by the rotation angle sensor 1 will be explained with reference to flowcharts of Figs. 8 and 9.

In step ST1 of Fig. 8, the rotation angle sensor 1 is turned on. In step ST2, the processor 5 receives digital signals (S3 (0), S4(0)) from the magnetic sensors 32 and 42 in response to the activation of the rotation angle sensor 1 and calculates a present period number j3 (0) of the magnetic sensor 32 and a present steering angle θ(0) of the steering shaft as explained above.

In steps ST409 and ST410, the digital signal value S3 (0) and period number j3(0) are stored in a memory (not shown).

Step ST3 checks to see if the rotation angle sensor 1 has been turned off. If it has been turned off, the procedure ends, and if not, step ST4 is carried out.

In step ST4, the rotation angle sensor 1 calculates a steering angle by counting up/down the period number. More precisely, in step ST401 of Fig. 9, the processor 5 provides a select signal and a clock signal to the magnetic sensor 32 at an n-th sampling point, to read a digital signal provided by the magnetic sensor 32.

In step ST402, the processor 5 calculates the difference $\Delta S3$ between the read (present) digital signal value S3 (n) and a previous digital signal value S3(n-1).

In step ST403, the processor 5 determines whether or not the difference $\Delta S3$ calculated in step ST402 satisfies the expression (9). If it satisfies the expression (9), step ST404 is carried out, and if not (NO in step ST403), step ST405 is carried out.

In step ST404, the processor 5 sets the present period number j 3 (n) to be equal to the previous period number j3 (n-1) and advances to step ST408.

In step ST405, the processor 5 determines whether or not the difference $\Delta S3$ calculated in step ST402 satisfies the expression (11). If it satisfies the expression (11), step ST406 is carried out, and if not (NO in step ST405), step ST407 is carried out. Here, the dissatisfaction of the expression (11) is equal to the satisfaction of the expression (12).

In step ST406, the processor 5 sets the present period number j3 (n) to be smaller than the previous period number j3(n-1) by one and advances to step ST408.

In step ST407, the processor 5 sets the present period number j3 (n) to be larger than the previous period number j3(n-1) by one and advances to step ST408.

In step ST408, the processor 5 calculates a steering angle θ (n) from the expression (15) according to the period number j 3 (n) calculated in step ST404, ST406, or ST407 and the digital signal read in step ST401.

In steps ST409 and ST410 of Fig. 8, the processor 5 stores the present period number j3(n) and present digital signal value S3(n) in the memory (not shown). Thereafter, step ST3 is again carried out.

In this way, the rotation angle sensor 1 according to the embodiment calculates a steering angle θ(n) of the steering shaft according to a digital signal provided by one of the magnetic sensors 32 and 42. The rotation angle sensor 1 of the embodiment can calculate the steering angle θ(n) more easily and speedily than the related art. Namely, the rotation angle sensor 1 can shorten the calculation time τ from the time point when the processor 5 reads the digital signal to the time point when the processor 5 completes the calculation of the steering angle θ (n). For example, the embodiment can shorten the calculation time τ of 5 msec according to the related art to about 1 msec. Shortening the calculation time r results in a reduction in any possible error occurring between an actual absolute angle of the steering shaft and the steering angle θ(n) calculated by the processor 5. Also, shortening the calculation time τ results in reducing the output timing error of the Z-phase pulse signal.

The rotation angle sensor 1 can calculate the steering angle θ (n) of the steering shaft according to a digital signal provided by one of the magnetic sensors. Namely, unlike the related art, the rotation angle sensor 1 needs no circuits to simultaneously read digital signals from the magnetic sensors 32 and 42.

Only when turned on, the rotation angle sensor 1 calculates a steering angle θ(0) according to digital signals provided by the magnetic sensors 32 and 42. Therefore, the calculation time τ at this moment is the same as that of the related art. At this time, however, the steering shaft is not turned, or is turned slowly. Therefore, there will be substantially no error between an actual absolute angle of the steering shaft and the steering angle θ(0) calculated by the processor 5. At this time, there is no need for simultaneously reading the digital signals from the magnetic sensors 32 and 42 due to the above-mentioned reason. Therefore, the rotation angle sensor 1 needs no circuits for simultaneously reading the signals.

The rotation angle sensor 1 can calculate a steering angle θ (n) of the steering shaft according to a digital signal provided by one of the magnetic sensors, and therefore, can reduce the sampling interval *Tsam* to shorter than that of the related art. Due to this, the sampling interval can be made shorter than the time (for example, the time between the time points "a" and "b" of Fig. 2) in which the steering shaft is in a neutral state.

The embodiment can set sampling points so that the sampling interval Tsam satisfies the expressions (13) and (14) . As a result, the rotation angle sensor 1 can correctly calculate a present period number j3(n) and contain an output timing error of the Z-phase pulse signal within the allowance σ.

The rotation angle sensor 1 calculates a steering angle θ (n) according to the difference $\Delta S3$ (the expressions (9), (11), and (12) and steps ST403 to ST408) . Therefore, can correctly calculate the steering angle θ(n).

The speed ratio of the detection gear 3 is greater than that of the detection gear 4, and the magnetic sensor 32 detects an absolute angle of the detection gear 3. Accordingly, the rotation angle sensor 1 can correctly calculate a steering angle θ(n) of the steering shaft.

The rotation angle sensor 1 calculates steering angles θ(n) only during the period in which the rotation angle sensor 1 is active. Namely, there is no need to supply a dark current to the rotation angle sensor 1.

The rotation angle sensor 1 is usable as an absolute angle sensor that detects an absolute angle of a multiple-rotation object from a reference position of the multiple-rotation object.

Each of the expressions (7), (8), (10), (13), and (15) includes "360" (degrees). This angle is a rotation range detectable by the magnetic sensor 32, and therefore, is changeable according to the rotation range.

As mentioned above, the rotation angle sensor according to the present invention can calculate the steering angle of a steering shaft according to a rotation angle detected by one (first detector) of either first or second detectors. Compared with the related art, the rotation angle sensor of the present invention can easily and speedily calculate a steering angle to greatly shorten the calculation time τ. The rotation angle sensor of the present invention needs no complicated circuits to simultaneously read rotation angles detected by the first and second detectors. Namely, the rotation angle sensor of the present invention is achievable with a simple circuit structure.

Although the invention has been described above by reference to certain embodiments of the invention, the invention is not limited to the embodiments described above. Modifications and variations of the embodiments described above will occur to those skilled in the art, in light of the above teachings. The scope of the invention is defined with reference to the following claims.

**Claims**

1.    A rotation angle sensor for a multiple-rotation object rotatable within a predetermined range, having first rotors (3, 4) and second (4, 3) rotors each interlinked with the multiple-rotation object and having different speed ratios with respect to the multiple-rotation object, a first detector (31, 32; 41, 42) configured to detect a rotational position of the first rotor, a second detector (41, 42; 31, 32) configured to detect a rotational position of the second rotor, the rotation angle sensor comprising

   a processor (5) configured to calculate a rotation angle (θ) of the multiple-rotation object from a reference rotation angle,

   the number of rotations of the first rotor being calculated according to the rotational positions of the first and second rotors,

   the rotation angle of the multiple-rotation object being calculated from the rotational position and calculated number of rotations of the first rotor, and

   the speed ratio of the first rotor and the speed ratio of the second rotor being selected so that the number of rotations of the multiple-rotation object is uniquely determined from the rotational positions of the first and second rotors.

2.    The rotation angle sensor of claim 1, wherein:

   the processor obtains the rotational positions of the first and second rotors from the first and second detectors at predetermined time intervals *Tsam* expressed as follows:

$$Tsam < \frac{\Psi}{2\omega_0} \times \frac{1}{i},$$

   where *i* is the speed ratio of the first rotor, ψ is an angular range detectable by the first detector, and $\omega_0$ is a maximum angular speed of the multiple-rotation object.

3.    The rotation angle sensor of claim 2, wherein:

   the multiple-rotation object is a steering shaft, the first rotor is a first detection gear, and the second rotor is a second detection gear.

4.    The rotation angle sensor of claim 3, wherein:

   the speed ratio i is given as the number of teeth of a gear of the multiple-rotation object divided by the number of teeth of the first detection gear.

5.    The rotation angle sensor of claim 2, wherein:

theprocessor compares the amplitude ($|\Delta S3|$) of the rotational position difference ($\Delta S3$) between a previous rotational position and a present rotational position both being detected by the first detector with a predetermined positive value for allowance (Sx);

(1) in the case where the rotational position difference is equal to or lower than the allowance, sets a present number of rotations (j (n) ) of the first rotor to be equal to a previous number of rotations (j(n-1)) thereof;

(2) in the case where the rotational position difference is greater than the allowance, sets the present number of rations of the first rotor to be smaller than the previous number of rations by one; and

(3) in the case where the rotational position difference is smaller than an opposite number (-Sx) of the positive value for allowance, sets the present number of rotations of the first rotor to be larger than the previous number of rotations by one, the positive value for allowance satisfying the following expression:

$$\frac{\sigma}{360°} \times 2^{(res3)} \times \frac{m}{n3} < Sx < \frac{1}{2}\, 2^{(res3)}$$

where $\sigma$ (degrees) is an output timing allowance for an angle detected signal provided by the first detector, m is the number of teeth of the first detection gear, n3 is the number of teeth of a gear of the multiple-rotation object, and res3 (bits) is a position detecting resolution of the first detector.

6. The rotation angle sensor of claim 5, wherein
the predetermined time interval Tsam further satisfies a relationship of $Tsam \le \sigma/\omega_0$.

7. The rotation angle sensor of claim 1, wherein
the speed ratio of the first rotor is greater than that of the second rotor.

8. A method of detecting a rotation angle of a multiple-rotation object that is rotatable within a predetermined range, the method employing first (3, 4) and second (4, 3) rotors interlinked with the multiple-rotation object and having different speed ratios with respect to the multiple-rotation object, the method comprising:

calculating the number of rotations of the first rotor according to a rotational position of the first rotor and a rotational position of the second rotor; and
calculating a rotation angle of the multiple-rotation object according to the rotational position and calculated number of rotations of the first rotor, wherein
the speed ratio of the first rotor and the speed ratio of the second rotor being selected so that the number of rotations of the multiple-rotation object is uniquely determined from the rotational positions of the first and second rotors.

9. The method of claim 8, wherein
the rotational positions of the first and second rotors are obtained at predetermined time intervals Tsam expressed as follows:

$$Tsam < \frac{\Psi}{2\omega_0} \times \frac{1}{i}\,,$$

where $i$ is the speed ratio of the first rotor, $\psi$ is an angular range detectable by the first detector, and $\omega_0$ is the maximum angular speed of the multiple-rotation object.

# FIG.1
## PRIOR ART

## FIG.2A

## FIG.2B

# FIG.3

# FIG.4

# FIG.5A

OUTPUT OF MAGNETIC SENSOR 32 (y-axis)

STEERING ANGLE (x-axis)

$\Delta S3(n)$

$2rez3$
$S3(0)$
$S3(n)$
$S3(n-1)$
$0$

$j3=-2$, $j3=-1$, $j3=0$, $j3=1$, $j3=2$, $j3=3$

n-th SAMPLING $\theta(n)$

(n-1)th SAMPLING $\theta(n-1)$

NEUTRAL STEERING POINT $\theta=0deg$

POWER ON ABSOLUTE STEERING ANGLE $\theta(0)$
$j3(0)=1$ $j4(0)=1$

# FIG.5B

OUTPUT OF MAGNETIC SENSOR 42 (y-axis)

STEERING ANGLE (x-axis)

$2rez4$
$S4(0)$
$0$

$j4=-2$, $j4=-1$, $j4=0$, $j4=1$, $j4=2$

EP 1 522 486 A2

# FIG.6

EP 1 522 486 A2

OUTPUT OF MAGNETIC SENSOR 32

※$S3(sam1) = \frac{1}{2} 2^{res3}$

$2^{res3}$

$S3(Sam1)$

$S3(Sam2)$

Sam2' Sam1 | Sam2

Tsam

Sam3

$\Delta T$

TIME

EP 1 522 486 A2

FIG.7A

CALCULATED ABSOLUTE
STEERING ANGLE [deg]

$\alpha + 720$

720

$\beta + 720$

$\alpha + 360$

360

$\beta + 360$

$\alpha$

0

$\beta$

$\alpha - 360$

$-360$

$\beta - 360$

$\alpha - 720$

$-720$

$\beta - 720$

STEERING
ANGLE

Z-PHASE OUTPUT
VOLTAGE

FIG.7B

Hi

Lo

STEERING
ANGLE

# FIG.8

```
        ┌──────────┐
        │  START   │
        └────┬─────┘
             │                    ST1
        ┌────▼──────────────┐
        │  TURN ON POWER    │
        └────┬──────────────┘
             │                    ST2
        ┌────▼──────────────┐
        │ CALCULATE ABSOLUTE│
        │  STEERING ANGLE   │
        └────┬──────────────┘
             │
             │◄──────────────────────────────┐
             │                    ST409       │
        ┌────▼──────────────┐                 │
        │    STORE J3       │                 │
        └────┬──────────────┘                 │
             │                    ST410        │
        ┌────▼──────────────┐                 │
        │    STORE S3       │                 │
        └────┬──────────────┘                 │
             │                    ST3          │
           ◆─▼─────◆      NO                   │
          ╱ POWER   ╲──────────┐              │
          ╲ OFF ?   ╱          │    ST4        │
           ◆───┬───◆     ┌─────▼──────────┐   │
               │ YES     │ CALCULATE      │   │
        ┌──────▼──┐      │ STEERING       │   │
        │  END    │      │ ANGLE BY       │   │
        └─────────┘      │ COUNTING       │   │
                         │ UP/DOWN PERIOD │   │
                         │ NUMBER         │   │
                         └────────────────┴───┘
```

# FIG.9

```
        ┌─────────────────────────┐
        │  CALCULATE  STEERING    │
        │ ANGLE  BY  COUNTING UP/ │
        │  DOWN  PERIOD  NUMBER   │
        └─────────────────────────┘
                     │  ST401
                     ▼
        ┌─────────────────────────┐
        │        READ  S3         │
        └─────────────────────────┘
                     │  ST402
                     ▼
        ┌─────────────────────────┐
        │  ΔS3 = S3(n) − S3(n−1)  │
        └─────────────────────────┘
                     │  ST403
                     ▼
               ◇           NO
           |ΔS3| ≦ Sx ─────────────┐
               ◇                    │  ST405
               │                    ▼
              YES              ◇        NO
                            ΔS3 > Sx ──────────┐
                               ◇               │
                               │               │
                              YES              │
```

| ST404 | ST406 | ST407 |
|-------|-------|-------|
| $j3(n) = j3(n-1)$ | $j3(n) = j3(n-1) - 1$ | $j3(n) = j3(n-1) + 1$ |

```
                     │  ST408
                     ▼
        ┌─────────────────────────┐
        │       CALCULATE         │
        │       STEERING          │
        │       ANGLE  θ          │
        └─────────────────────────┘
                     │
                     ▼
               (  RETURN  )
```